# EUROPEAN PATENT APPLICATION

(11) **EP 1 096 159 A1**
(43) Date of publication of application: **02.05.2001**
(21) Application number: 00309312.7
(22) Date of filing: 23.10.2000
(51) Int. Cl.: F16B 12/26, A47F 7/14

(54) **Assembly apparatus**

(30) Priority: 28.10.1999 GB 9925381
(71) Applicant: Bartuf Systems Ltd, Leeds LS11 9XJ (GB)
(72) Inventor: Farrar, Peter, Leeds, West Yorkshire, LS29 6EX (GB); Steel, Joanna, Leeds, West Yorkshire, LS11 9XJ (GB)
(74) Representative: Sherrard-Smith, Hugh

(57) **Abstract**

A release member in the form of a key comprises an elongate shaft 58 having at one end a handle 60 to be held by the user. At the other end of the shaft an axially enlarged portion 62 protrudes from either side of the shaft 58. With a user holding the key, the shaft is pushed through the opening 24 and the base 18 with the enlarged portions 62 extending through slots 64 at either side of the opening. The key then travels up between the walls 20 and 22 with the shaft 58 sliding in grooves 66 formed in the side walls. Abutment of the shaft 58 with the ends of the grooves restricts further movement of the key and ensures that the enlarged portions are in the optimum position. Release is achieved by turning the handle through 90° such that the enlarged portions 62 push against and urge the walls 20 and 22 apart.

## Description

This invention relates to assembly apparatus and a method for operating an assembly.

Display units, such as newspaper and magazine racks, are typically constructed from plastics panels which are connected to each other, or moulded into shape from a single large piece of material, to form channels and assemblies into which shelves are positioned.

Such display units are typically manufactured and assembled or moulded at a single site, and transported in assembled form to the customer. The assembled units are generally of a large volume and hence are relatively expensive to deliver.

If a larger, or smaller display unit is required at a later date then either a new unit is required from the manufacturing plant, or the existing unit has to be disassembled. This may require special tools to remove any securement devices connecting individual panels of the assembled unit. This can take up a large amount of time.

It is therefore one object of the present invention to overcome at least some of the problems associated with assembled display units and securement devices therefor.

According to one aspect of the present invention, assembly apparatus comprising first and second parts arranged, in use, to be held together whereby, when the parts are held together, the first part is retained in position relative to the second part by retention means extending from the first part is characterised in that the retention means extend either side of a portion of the second part and cooperate with the second part at a region spaced from the first part to inhibit detachment of the parts.

In use, the retention means may directly cooperate with the second part to inhibit detachment of the parts.

The retention means may include at least one abutment facing towards the first part arranged to cooperate with a retention abutment on the second part facing away from the first part to inhibit detachment of the parts. At least one, and preferably both of the abutments may comprise an edge such as an elongate edge.

The retention means may be capable of co-operating with the second part at locations spaced from each other to resist attempted relative movement of the parts in different directions.

The abutment of the second part may comprise an opening through the second part.

Both portions of the retention means that extend either side of the second part may include an abutment.

The second part may be arranged to cooperate with both portions of the retention means that extend either side to resist relative translational movement of the parts in the direction between those portions of the retention means that extend either side of the part.

The parts of the retention means that extend either side of the first part may be arranged to resist movement away from each other in the region where they cooperate with the second part as a result of the flexure in the extent of those parts. The portion of the second part that is located between the portions of the retention means may be of greater thickness than the thickness between the portions of the retention means that cooperate with the second part whereby, during attachment of the parts, that portion of the second part can urge the portions of the retention means away from each other against a resilient force.

A second part may be arranged to be a snap fit in the retention means.

The first part may be arranged to contact the second part when the parts are held together.

The parts may comprise generally planar members with an edge face of the second part being arranged to cooperate with the planar face of the first part.

The parts may be arranged to be held together at an angle to each other such that the second part extends away from the first part.

Where the parts are generally planar members, the planes of the parts may extend perpendicularly to each other.

The parts may be arranged to be detachably held together. The attachment may be arranged to be affected by causing relative movement of the portions of the retention means that extend either side of a portion of the second part away from each other. That movement may be arranged to be effected by movement of a release member located between the portions of the retention means. The release member may extend through an opening in the first part and between portions of the retention means. The release member may be operable from the opposite side of the first member to that which the second member is held against. The release member may extend into an opening in the portion of the second part that is located between the portions of the retention means.

The release member may be removably located in the region between the portions of the retention means

The release member may include a non-circular cross-section transverse to the intended direction of insertion between the portions of the retention means. The apparatus may include an opening corresponding with that non-circular cross-section. The apparatus may include an abutment restricting the extent of insertion of the release member.

At least one of the portions of the retention means that face each other may include a groove arranged to accommodate the release member.

The retention means may be separate from the first part and may be detachable from the first part. The retention means may extend through the first part. The retention means may cooperate with the first part to prevent movement of the retention means through the first part in a direction towards the second part. The retention means may be a friction fit within the first part.

According to a further aspect of the present invention a method of operating an assembly comprising first and second parts comprises causing those parts to be held together by the first part being retained in position relative to the second part with retention means that extend from the first part, the method being characterised in that the retention means extend either side of a portion of the second part and cooperate with the second part at a region spaced from the first part to inhibit detachment of the parts.

The method may comprise causing at least one abutment on the retention means to cooperate with an abutment on a second part to hold the parts together.

The method may comprise the retention means co-operating with the second part at spaced locations to resist attempted movement of the parts in different directions such as attempted tilting movement of the parts in a plane extending generally between the portions of the retention means that extend either side of the first part. The method may comprise the retention means inhibiting relative translational movement of the parts in a direction between the portions between retention means that extend either side of the second part.

The method may comprise connecting the second part to the first part by causing relative movement between the retention means and the second part. The method may comprise that relative movement causing the retention means to be flexed outwardly during at least part of that relative movement. The method may comprise the retention means being caused to move back once the parts are in the position in which they are to be held together such as by a snap fit.

The method may comprise causing the first part to contact the second part when those parts are held together. The method may comprise the edge surface of the first part coming into contact with a planar surface of the second part when the parts are held together.

The method may comprise detaching the retention means such as by causing the portions of retention means that extend either side of the first part to move away from each other. That movement may be effected by an operating member which may be actuated by a user from the opposite side of the first part to that which the second part is connected. That actuation may be effected by causing pivotal movement to cause an enlarged portion of a release member to move from a first position at which it extends transverse to the direction between the portions of the retention means to a direction in which it extends generally between those portions of the retention means.

The present invention also includes an assembly held together by an assembly apparatus as herein referred to or by a method as herein referred to. The assembly may include two spaced assembly apparatus holding together a first part to a second part. Alternatively or additionally the assembly may include a second part being held together with two different first parts, for instance on opposite sides of the first part by at least one spaced assembly apparatus.

The present invention includes any combination of the herein referred to features or limitations.

For a better understanding of the present invention, a specific embodiment will now be described by way of example and with reference to the accompanying drawings, in which:-
Figure 1 illustrates a front view of a securement device 10;
Figure 2 illustrates a side view of the securement device 10 of Figure 1;
Figure 3 illustrates a bottom view of the securement device of Figures 1 and 2;
Figure 4 illustrates a plan view of a first plate member 12 to be secured.
Figure 5 illustrates a plan view of a second plate member 14;
Figure 6 illustrates a side sectional view of the securement device 10 about to hold the plates together;
Figure 7 illustrates a view similar to Figure 6 wherein the plate members are locked together;
Figure 8 illustrates a side view of a release member 16;
Figure 9 illustrates a front view of Figure 8;
Figures 10A to 10D illustrate, sequentially, the release member of Figures 8 and 9 releasing the plate members from each other, and
Figure 11 is a perspective view of a display unit.

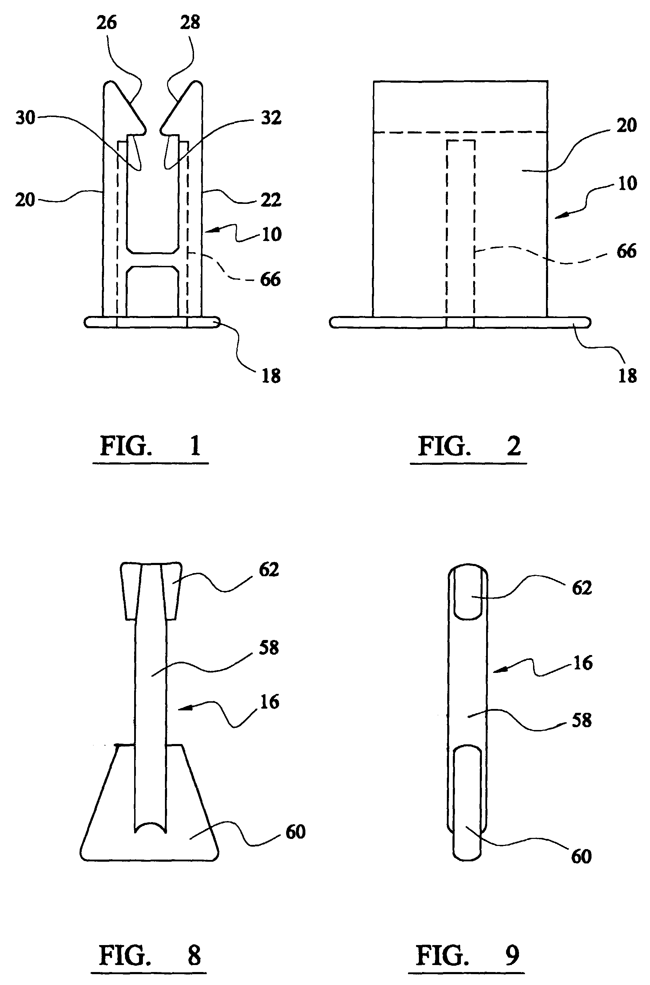

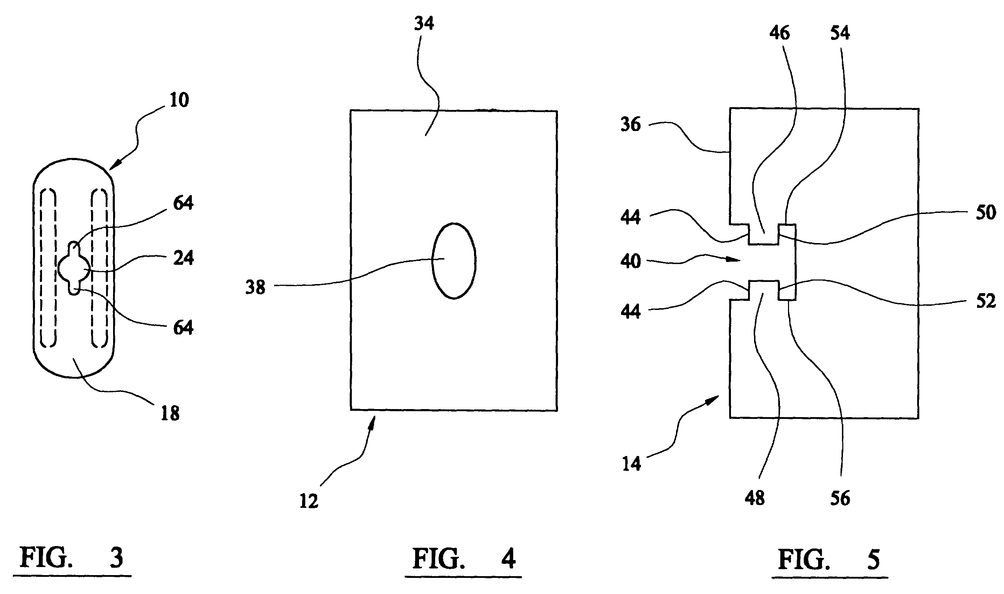

Referring first to Figures 1, 2 and 3, the releasable securement device 10 includes a base 18. First and second side walls 20 and 22 extend upwardly from the base with those members being spaced from each other. The base 18 has an opening 24 affording access to the space between the side walls 20 and 22.

Lips 26 and 28, including rebated edges 30 and 32, extend downwardly and inwardly from the free edge of each wall 20 and 22.

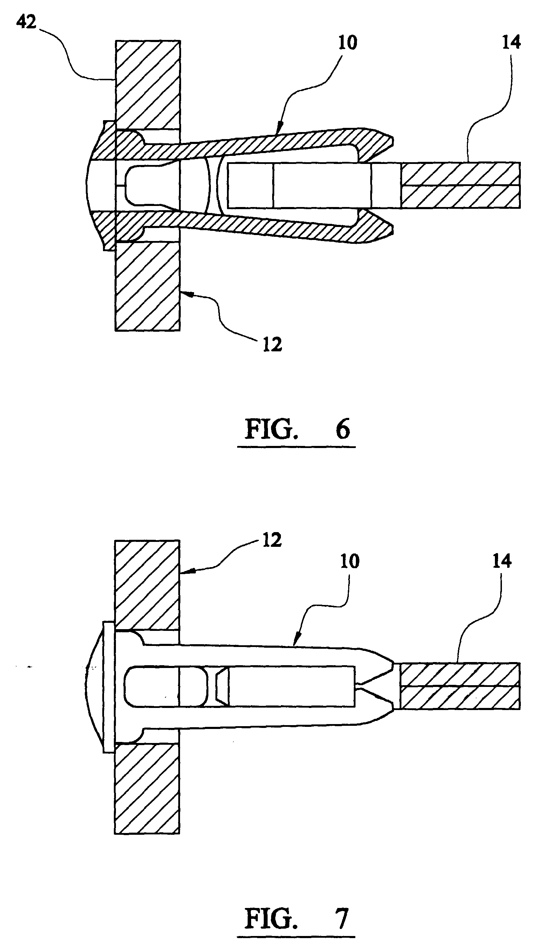

The device 10 is used to secure the flat face 34 of the first plate 12 to an end face 36 of the second plate 14. The plate 12 is provided with an opening 38 extending therethrough. The second plate 14 includes an H-shaped slot 40 extending inwardly from the end face 36. In order to secure the plates together the securement member 10 is used. First the side walls 20 and 22 are passed through the opening 38 in the plate 12 until the base 18 abuts the outer surface 42 of the plate 12 with the device being frictionally held in the plate 12, as shown in Figure 6.

The plate 14 is then pushed towards the plate 12 with the surface 44 of the slot pushing against the lips 26 and 28 to flex the side walls apart. That movement continues until the surfaces 46 and 48 of the slot pass beyond the rebate edges 30 and 32 of the inwardly sloping lips 26 and 28 of the securement device 10. At this point the natural resilience of the first and second side members 20 and 22 forces the side members to move or snap back to a closed position thereby causing the inwardly sloping lips 26 and 28 to come towards each other in a space provided by the H-shaped slot 40. The securement device 10 and the slot 40 are so dimensioned that, as the inwardly sloping lips 26 and 28 come together, the edge 36 of the plate 14 abuts the plate 12. The plate 14 is prevented from moving away from the plate 12 by the engagement surfaces 50 and 52 of the slot 40 being retained by the rebated edges 30 and 32. Furthermore, movement of the plate 14 in the direction of extent of its plane along the plate 12, is prevented by the ends of the lips abutting the surfaces 54 and 56 of the slot 40. Additionally, movement of the plate 14 transverse to its plane along the plate 12, is resisted by the surfaces 46 and 48 abutting the walls 20 and 22. Furthermore, tilting of the plate 14 transverse to its general plane is resisted by abutment with the surfaces 50 and 52 with the edges 30 and 32 and by the base end face 36 abutting the plate 12.

In order to release the plates the release member 16 is used.

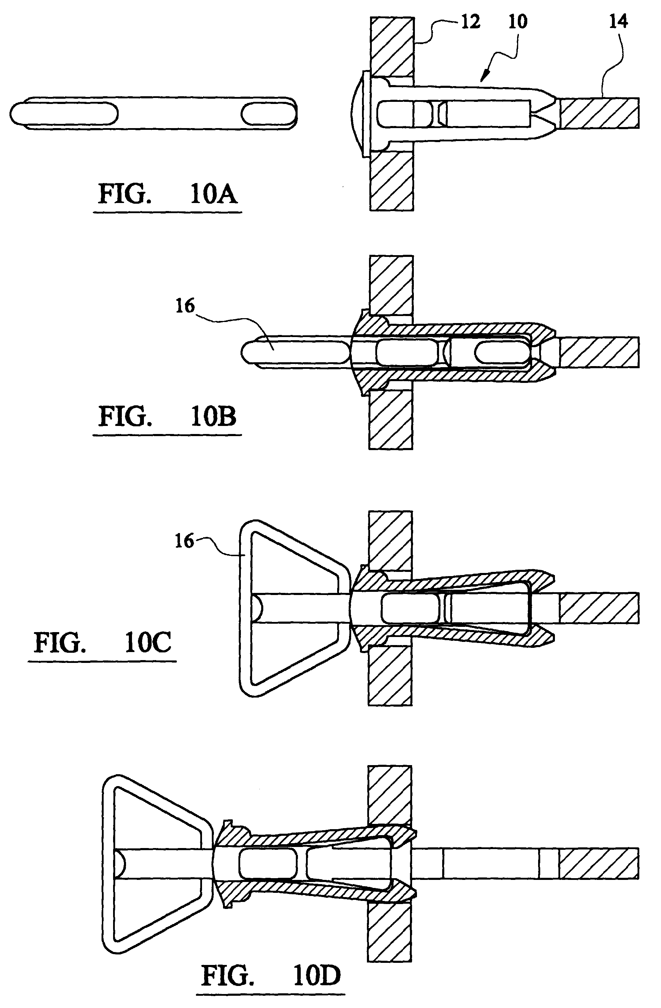

The release member, in the form of a key, as illustrated in Figures 8 and 9, consists of an elongate shaft 58 having at one end a handle 60 to be held by the user. At the other end of the shaft an axially enlarged portion 62 protrudes from either side of the shaft 58.

With a user holding the key, the shaft is pushed through the opening 24 in the base 18 with the enlarged portions 62 extending through slots 64 at either side of the opening 24. In this way correct alignment of the key is ensured. The key then travels up between the walls 20 and 22 with the shaft 58 sliding in grooves 66 formed in the side walls. Abutment of the shaft 58 with the ends of the grooves restricts further movement of the key and ensures that the enlarged portions are in the optimum position, as shown in figure 10B.

In order to release the second plate 14 from the securement device 10 the operator, using the handle 60, now rotates the key through 90°. As the key is rotated the axially enlarged portions 62 are forced to push against the inner side of the walls 20 and 22 urging them apart. As the walls are urged apart, the rebated edges 30 and 32 are forced away from engagement surfaces 50 and 52 of the plate 14, as shown in figure 10C. This allows the plate 14 to be withdrawn from the securement device 10.

The key can be rotated another 90° to return the walls 20 and 22 back to their natural position of flexure. The securement device 10 can then be withdrawn through the opening 24. Alternatively, as shown in figure 10D, the key and the device 10 can be withdrawn with the walls 20 and 22 being biased apart and held by the key.

As the key is located in the optimum position by abutment with the ends of the grooves 66, the walls are not unduly flexed such as may be the case if the enlarged portions were to act on the walls in the region of their attachment to the base.

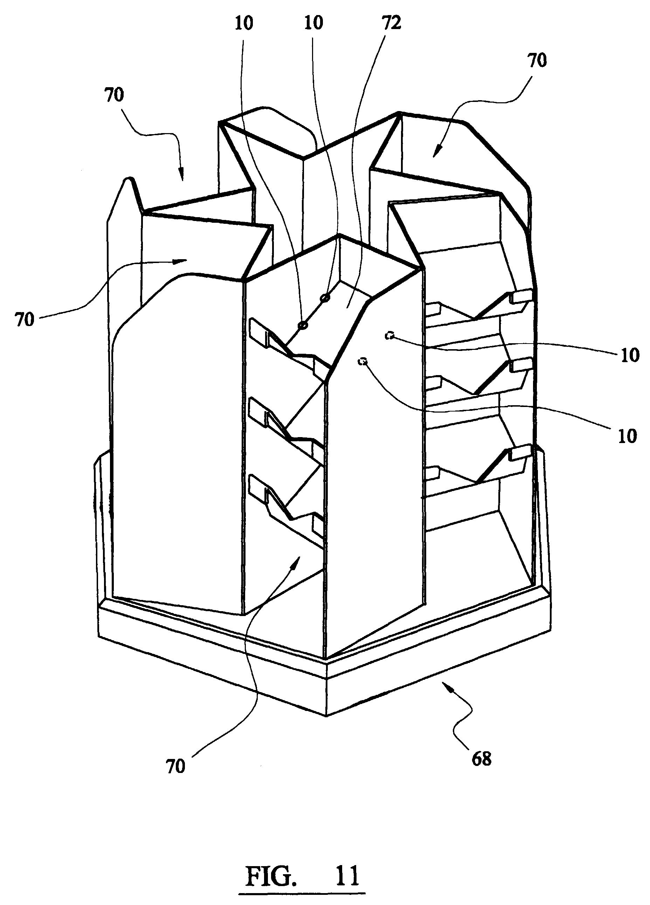

Figure 11 shows a display unit 68 that has been assembled using the securement device 10. Six display bays 70 are shown, each having three sloping support shelves 72. It can be seen that the unit can be assembled and disassembled quickly with the number of shelves and their position being able to be altered.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extend to any novel one, or any novel combination, of the features disclosed in this specification (including any accompanying claims, abstract and drawings), or to any novel one, or any novel combination, of the steps of any method or process so disclosed.

## Claims

1. Assembly apparatus comprising first and second parts arranged, in use, to be held together whereby, when the parts are held together, the first part is retained in position relative to the second part by retention means extending from the first part characterised in that the retention means extend at either side of the portion of the second part and cooperate with the second part at a region spaced from the first part to inhibit detachment of the parts.

2. Apparatus as claimed in Claim 1 in which the retention means directly cooperate with the second part to inhibit detachment of the parts.

3. Apparatus as claimed in any preceding claim in which both portions of the retention means that extend either side of the second part include an abutment.

4. Apparatus as claimed in any preceding claim in which the second part is arranged to be a snap fit in the retention means.

5. Apparatus as claimed in any preceding claim in which the attachment is arranged to be effected by causing relative movement of the portions of the retention means that extend either side of the portion of the second part away from each other with the relative movement of the portions of the retention means being arranged to be effected by movement of a release member located between the portions of the retention means and with the release member extending through an opening in the first part and between portions of the retention means.

6. Apparatus as claimed in Claim 5 in which the release member extends into an opening in the portion of the second part that is located between the portions of the retention means.

7. Apparatus as claimed in Claim 5 or 6 including an abutment restricting the extent of insertion of the release member.

8. A method of operating an assembly comprising first and second parts comprising causing those parts to be held together by the first part being retained in position relative to the second part with retention means that extend from the first part, the method being characterised in that the retention means extend either side of the portion of the second part and cooperate with the second part at a region spaced from the first part to inhibit detachment of the parts.

9. A method as claimed in Claim 8 in which the operating member is actuated by a user from the opposite side of the first part to that which the second part is connected.

10. A method as claimed in Claim 9 in which the actuation is effected by causing pivotal movement to cause an enlarged portion of a release member to move from a first position at which it extends transverse to the direction between the portions of the retention means to a direction in which it extends generally between those portions of the retention means.
